# EUROPÄISCHE PATENTSCHRIFT

(11) **EP 2 846 433 B1**
(45) Veröffentlichungstag und Bekanntmachung des Hinweises auf die Patenterteilung: **21.03.2018**
(21) Anmeldenummer: 14181666.0
(22) Anmeldetag: 20.08.2014
(51) Int. Cl.: H02H 9/04, H02H 11/00, H02H 3/087, H02H 5/12, B23K 9/10

(54) **Energieversorgungseinheit für Schweißstromquelle**
Energy supply unit for welding power source
Unité d'alimentation en énergie pour source de courant de soudage

(30) Priorität: 10.09.2013 DE 102013109894
(43) Veröffentlichungstag der Anmeldung: 11.03.2015
(73) Patentinhaber: Lorch Schweisstechnik GmbH, 71549 Auenwald (DE)
(72) Erfinder: Jaeschke, Birger, 71522 Backnang (DE)
(74) Vertreter: Hoeger, Stellrecht & Partner Patentanwälte mbB

(56) Entgegenhaltungen:
- EP-A1- 0 084 104
- EP-A1- 1 275 969
- WO-A1-2009/029360
- DE-A1-102008 049 705

## Beschreibung

Die Erfindung betrifft eine Energieversorgungseinheit zur Versorgung einer Schweißstromquelle mit elektrischer Energie, umfassend ein zumindest in einem Teilbereich elektrisch leitfähiges Gehäuse, einen im Gehäuse angeordneten, elektrischen Akkumulator sowie einen ersten Ausgangsanschluss und einen zweiten Ausgangsanschluss, wobei die beiden Ausgangsanschlüsse zur Bereitstellung elektrischer Energie mit Eingangsanschlüssen der Schweißstromquelle lösbar verbindbar sind.

Schweißstromquellen kommen bei Lichtbogen-Schweißverfahren zum Einsatz, bei denen zwischen einer Schweißelektrode und einem Werkstück ein Lichtbogen brennt, so dass das lichtbogenseitige Ende einer Schweißelektrode schmilzt und Werkstoff in Form von Tropfen auf das Werkstück übergeht. Bekannte Schweißstromquellen weisen häufig einen Netzstromkreis auf mit einer Gleichrichterschaltung, die eine an Eingangsanschlüssen der Schweißstromquelle anliegende Wechselspannung, die von einer Wechselspannungsquelle bereitgestellt wird, in eine Gleichspannung wandelt. An die Gleichrichterschaltung schließen sich üblicherweise ein Gleichspannungszwischenkreis an sowie ein weiterer Schaltkreis zur galvanischen Potentialtrennung des Netzstromkreises von einem Schweißstromkreis, in den die Schweißelektrode geschaltet ist, und zur Steuerung und Regelung der in den Schweißstromkreis übertragenen Energie. Derartige Schweißstromquellen werden häufig auch als Inverterschweißstromquellen bezeichnet.

Um Schweißstromquellen auch dann betreiben zu können, wenn keine Wechselspannungsquelle zur Verfügung steht, insbesondere kein öffentliches Spannungsversorgungsnetz, kann eine separate Energieversorgungseinheit zum Einsatz kommen, mit der die Schweißstromquelle mit elektrischer Energie versorgt werden kann. Die Energieversorgungseinheit weist einen elektrischen Akkumulator auf, der in einem Gehäuse angeordnet ist. Das Gehäuse kann aus mechanischen Stabilitätsgründen elektrisch leitfähige metallische Bereiche aufweisen. Ein erster Ausgangsanschluss und ein zweiter Ausgangsanschluss der Energieversorgungseinheit können über ein Verbindungskabel mit entsprechenden Eingangsanschlüssen der Schweißstromquelle verbunden werden. Die an den Ausgangsanschlüssen der Energieversorgungseinheit anliegende Gleichspannung kann beispielsweise in den Gleichspannungszwischenkreis von Inverterschweißstromquellen eingespeist werden.

Die vorzugsweise tragbare Energieversorgungseinheit stellt vorteilhafterweise eine verhältnismäßig hohe Ausgangsspannung bereit, insbesondere eine Gleichspannung von mindestens 120 V, denn dies ermöglicht es, Schweißstromquellen ohne wesentliche leistungselektronische Unterschiede wahlweise mit einer üblichen Wechselspannung oder aber mit der von der Energieversorgungseinheit bereitgestellten Gleichspannung zu betreiben. Bei derartigen Spannungswerten muss allerdings der elektrisch leitfähige Gehäusebereich der Energieversorgungseinheit und auch ein elektrisch leitfähiger Gehäusebereich der Schweißstromquelle sorgfältig von den spannungsführenden Ausgangs-und Eingangsanschlüssen isoliert werden, denn sonst kann ein Benutzer, der sowohl den elektrisch leitfähigen Gehäusebereich der Energieversorgungseinheit als auch den elektrisch leitfähigen Gehäusebereich der Schweißstromquelle berührt, gefährdet werden. Wird an die Schweißstromquelle eine Wechselspannung angeschlossen, so ist das elektrisch leitfähige Gehäuse der Schweißstromquelle üblicherweise über einen Schutzleiter geerdet, so dass im Falle einer elektrisch leitenden Verbindung zwischen einem Eingangsanschluss der Schweißstromquelle und dem Gehäuse der Schweißstromquelle eine Fehlerstromschutzschaltung anspricht und dadurch eine Gefährdung des Benutzers ausgeschlossen wird. Wird allerdings an die Schweißstromquelle eine Energieversorgungseinheit mit einem elektrischen Akkumulator angeschlossen, so wird das Vorliegen einer elektrisch leitenden Verbindung zwischen einem der Eingangsanschlüsse und dem Gehäuse der Schweißstromquelle mangels Schutzleiter und Fehlerstromschutzschaltung nicht ohne Weiteres erkannt. In entsprechender Weise wird bei üblichen tragbaren Energieversorgungseinheiten auch das Vorliegen einer elektrisch leitenden Verbindung zwischen einem der Ausgangsanschlüsse und dem elektrisch leitfähigen Gehäusebereich der Energieversorgungseinheit nicht ohne Weiteres erkannt. Eine leitende Verbindung kann sich beispielsweise durch das Eindringen von Feuchtigkeit in die Gehäuse der Energieversorgungseinheit und der Schweißstromquelle ergeben. Berührt ein Benutzer bei einem derartigen Fehlerfall gleichzeitig sowohl das Gehäuse der Schweißstromquelle als auch den elektrisch leitfähigen Gehäusebereich der Energieversorgungseinheit, so kann der Fall auftreten, dass über den Benutzer ein gesundheitsschädlicher Strom vom Gehäuse der Energieversorgungseinheit zum Gehäuse der Schweißstromquelle fließt. Das Risiko einer derartigen Gesundheitsgefährdung sollte möglichst gering gehalten werden.

Aus der Veröffentlichung WO 2009/029360 A1, die den Oberbegriff des Anspruchs 1 bildet, ist eine tragbare Schweißstromquelle mit einer integrierten Energieversorgungseinheit bekannt. Die Energieversorgungseinheit weist einen in einem Gehäuse angeordneten elektrischen Akkumulator auf sowie einen ersten Ausgangsanschluss und einen zweiten Ausgangsanschluss. Die beiden Ausgangsanschlüsse sind zur Bereitstellung elektrischer Energie mit Eingangsanschlüssen der Schweißstromquelle verbunden.

Aus der Veröffentlichung EP 0 084 104 A1 ist eine Schweißstromquelle bekannt mit einem ersten Ausgang, der über eine Brennerleitung mit einem Schweißbrenner verbunden werden kann und mit einem zweiten Ausgang, der über eine Werkstückleitung mit einem zu schweißenden Werkstück verbunden werden kann. Die Werkstückleitung ist über einen Spannungs-Strom-Wächter mit dem Gehäuse der Schweißstromquelle verbunden und der Spannungs-Strom-Wächter steht mit einem Stromsensor in Wirkverbindung, der mit einem Schutzleiter und mit dem Gehäuse verbunden ist. Mittels des Spannungs-Strom-Wächters kann eine im Fehlerfall am ungeerdeten Werkstück auftretende Berührungsspannung erfasst und daraufhin die Schweißstromquelle abgeschaltet werden. Ein fehlerhafter Stromfluss im Schutzleiter kann mittels des Stromsensors erfasst werden, der dem Spannungs-Strom-Wächter ein Signal zum Abschalten der Schweißstromquelle bereitstellt.

Aufgabe der vorliegenden Erfindung ist es, eine Energieversorgungseinheit der gattungsgemäßen Art derart weiterzubilden, dass das Risiko einer Gesundheitsgefährdung des Benutzers, der elektrisch leitfähige Gehäusebereiche der Energieversorgungseinheit und der Schweißstromquelle kontaktiert, reduziert werden kann.

Diese Aufgabe wird bei einer Energieversorgungseinheit der eingangs genannten Art erfindungsgemäß dadurch gelöst, dass die Energieversorgungseinheit eine mit dem elektrisch leitfähigen Gehäusebereich der Energieversorgungseinheit verbundene Hilfspotentialschaltung sowie eine Schutzschaltung aufweist, wobei die an den Ausgangsanschlüssen bereitstellbare elektrische Energie mittels der Schutzschaltung in Abhängigkeit von einem Stromfluss reduzierbar ist, der zwischen der Hilfspotentialschaltung und dem elektrisch leitfähigen Gehäusebereich fließt, wobei die Hilfspotentialschaltung ein Hilfspotential bereitstellt, das sich von dem Potential unterscheidet, das vom elektrischen Akkumulator bereitgestellt wird.

Bei der erfindungsgemäßen Energieversorgungseinheit hängt die an den Ausgangsanschlüssen bereitstellbare elektrische Energie vom Stromfluss ab, der zwischen der Hilfspotentialschaltung und dem elektrisch leitfähigen Gehäusebereich fließt. Bei verhältnismäßig geringem Stromfluss, insbesondere in Fällen, in denen überhaupt kein Strom zwischen der Hilfspotentialschaltung und dem elektrisch leitfähigen Gehäusebereich fließt, kann an den beiden Ausgangsanschlüssen der Energieversorgungseinheit die maximale elektrische Energie des Akkumulators bereitgestellt werden. Liegt jedoch ein übermäßiger Stromfluss vor, so wird die an den Ausgangsanschlüssen bereitstellbare elektrische Energie reduziert oder vollkommen ausgeschaltet, denn ein übermäßiger Stromfluss könnte zu einer Gefährdung des Benutzers führen. Eine derartige Gefährdung könnte - wie voranstehend erläutert - beispielsweise darin bestehen, dass aufgrund einer mangelhaften Isolierung von einem der Ausgangsanschlüsse über den elektrisch leitfähigen Gehäusebereich der Energieversorgungseinheit und den Benutzer ein Strom zum elektrisch leitfähigen Gehäusebereich der Schweißstromquelle fließt.

Um dem Risiko einer Gefährdung des Benutzers entgegenzuwirken, wird bei der erfindungsgemäßen Energieversorgungseinheit die an den Ausgangsanschlüssen der Energieversorgungseinheit bereitstellbare elektrische Energie in Abhängigkeit vom Stromfluss gewählt, der zwischen der Hilfspotentialschaltung und dem elektrisch leitfähigen Gehäusebereich fließt. Die Hilfspotentialschaltung stellt ein Hilfspotential bereit, das sich von dem Potential unterscheidet, das vom elektrischen Akkumulator bereitgestellt wird. Liegt ein übermäßiger Stromfluss zwischen der Hilfspotentialschaltung und dem elektrisch leitfähigen Gehäusebereich vor, so wird die bereitgestellte elektrische Energie reduziert. Insbesondere kann vorgesehen sein, dass von der Energieversorgungseinheit im Falle eines derartigen Fehlers überhaupt keine elektrische Energie bereitgestellt wird. Die Gefahr einer Gefährdung des Benutzers kann dadurch zuverlässig vermieden werden und Isolationsschäden, die eine leitende Verbindung zwischen dem Akkumulator und dem leitfähigen Gehäusebereich der Energieversorgungseinheit zur Folge haben, können erkannt werden.

Der elektrisch leitende Gehäusebereich der Energieversorgungseinheit kann über ein Verbindungskabel mit dem elektrisch leitenden Gehäusebereich der Schweißstromquelle verbindbar sein.

Bei einer vorteilhaften Ausführungsform der Erfindung ist die an den Ausgangsanschlüssen der Energieversorgungseinheit bereitstellbare elektrische Energie mittels der Schutzschaltung reduzierbar, wenn der Stromfluss zwischen der Hilfspotentialschaltung und dem elektrisch leitenden Gehäusebereich einen vorgegebenen oder vorgebbaren Grenzwert überschreitet. Die Schutzschaltung kann hierzu ein Vergleichsglied aufweisen, das einen Eingangswert, der einem bestimmten Stromfluss zwischen der Hilfspotentialschaltung und dem elektrisch leitenden Gehäusebereich entspricht, mit einem vorgegebenen oder vorgebbaren Grenzwert vergleicht. Überschreitet der Eingangswert den Grenzwert, so wird die an den Ausgangsanschlüssen der Energieversorgungseinheit bereitstellbare elektrische Energie von der Schutzschaltung reduziert. Insbesondere kann vorgesehen sein, dass in einem derartigen Fall an den Ausgangsanschlüssen überhaupt keine elektrische Energie mehr bereitgestellt werden kann.

Besonders günstig ist es, wenn nach Überschreiten eines vorgegebenen oder vorgebbaren Grenzwertes des zwischen der Hilfspotentialschaltung und dem elektrisch leitfähigen Gehäusebereich fließenden Stromes die reduzierte Energiebereitstellung durch Auslösen eines Rücksetzsignals beendbar ist. Bei einer derartigen Ausgestaltung der Erfindung wird nach Überschreiten eines vorgegebenen oder vorgebbaren Grenzwertes die reduzierte Energiebereitstellung solange beibehalten, bis ein Rücksetzsignal ausgelöst wird. Die reduzierte Energiebereitstellung wird nicht etwa selbststätig schon dadurch beendet, dass er zwischen der Hilfspotentialschaltung und dem elektrisch leitenden Gehäusebereich fließende Strom den Grenzwert wieder unterschreitet. Zur Bereitstellung der maximalen Energie des Akkumulators ist es vielmehr erforderlich, ein Rücksetzsignal auszulösen, das die Schutzschaltung veranlasst, die Reduzierung der bereitstellbaren elektrischen Energie zu beenden. Das Überschreiten des vorgegebenen oder vorgebbaren Grenzwertes des zwischen der Hilfspotentialschaltung und dem elektrisch leitenden Gehäusebereich fließenden Stromes führt somit zu einer Aktivierung der Schutzschaltung dergestalt, dass die an den Ausgangsanschlüssen der Energieversorgungseinheit bereitstellbare elektrische Energie reduziert wird, und die Reduzierung bleibt so lange aufrechterhalten, bis die Schutzschaltung deaktiviert wird, indem ein Rücksetzsignal ausgelöst wird. Nach Auslösen des Rücksetzsignals kann von der Energieversorgungseinheit wieder die volle elektrische Energie bereitgestellt werden.

Von Vorteil ist es, wenn die Schutzschaltung ein Steuerglied zum Aktivieren und Deaktivieren der reduzierten Energiebereitstellung aufweist. Das Steuerglied kann beispielsweise ein Speicherelement aufweisen, in welchem das Überschreiten eines vorgegebenen oder vorgebbaren Grenzwertes des zwischen der Hilfspotentialschaltung und dem elektrisch leitenden Gehäusebereich fließenden Stromes gespeichert wird, wobei das Speicherelement durch ein Rücksetzsignal zurückgesetzt werden kann, so dass anschließend die reduzierte Energiebereitstellung beendet wird.

Bevorzugt ist das Steuerglied mit einem Rücksetzglied zum Beenden der reduzierten Energieabgabe verbunden. Das Rücksetzglied ist günstigerweise vom Benutzer manuell steuerbar. Beispielsweise kann das Rücksetzglied einen Taster aufweisen, der vom Benutzer betätigt werden kann, um die reduzierte Energiebereitstellung zu beenden.

Wie bereits erwähnt, kann bei Vorliegen eines übermäßigen Stromflusses zwischen der Hilfspotentialschaltung und dem elektrisch leitenden Gehäusebereich der Energieversorgungseinheit die bereitstellbare elektrische Energie reduziert werden. Bei einer vorteilhaften Ausgestaltung der Erfindung ist hierzu die an den Ausgangsanschlüssen anliegende Ausgangsspannung mittels der Schutzschaltung reduzierbar.

Es kann beispielsweise vorgesehen sein, dass die an den Ausgangsanschlüssen anliegende Ausgangsspannung mittels der Schutzschaltung auf einen Wert von maximal 120 V Gleichspannung reduziert werden kann. Eine Gefährdung des Benutzers kann dadurch vermieden werden.

Bei einer besonders vorteilhaften Ausgestaltung der Erfindung ist eine elektrische Verbindung zwischen mindestens einem Ausgangsanschluss und dem elektrischen Akkumulator in Abhängigkeit vom Stromfluss trennbar, der zwischen der Hilfspotentialschaltung und dem elektrisch leitenden Gehäusebereich fließt. Bei einem übermäßigen Stromfluss kann somit die elektrische Verbindung zwischen dem Akkumulator und mindestens einem Ausgangsanschluss unterbrochen werden, so dass diesem Ausgangsanschluss kein Strom mehr zugeführt werden kann, der zu einer Gefährdung des Benutzers führen könnte.

Alternativ oder ergänzend kann vorgesehen sein, dass der an den Ausgangsanschlüssen der Energieversorgungseinheit bereitstellbare Ausgangsstrom mittels der Schutzschaltung in Abhängigkeit vom Stromfluss begrenzbar ist, der zwischen der Hilfspotentialschaltung und dem elektrisch leitenden Gehäusebereich fließt.

Es kann beispielsweise vorgesehen sein, dass der an den Ausgangsanschlüssen bereitstellbare Ausgangsstrom auf einen Maximalwert von 30 mA Gleichstrom begrenzbar ist, falls ein übermäßiger Stromfluss von der Hilfspotentialschaltung zum elektrisch leitenden Gehäusebereich vorliegt. Die Begrenzung auf einen Ausgangsstrom von maximal 30 mA Gleichstrom stellt sicher, dass ein Benutzer auch im Falle einer fehlerhaften Isolierung der Ausgangsanschlüsse keiner Gefährdung unterliegt.

Besonders günstig ist es, wenn der Ausgangsstrom unter Beibehaltung einer an den Ausgangsanschlüssen anliegenden Ausgangsspannung mittels der Schutzschaltung in Abhängigkeit vom Stromfluss begrenzbar ist, der zwischen der Hilfspotentialschaltung und dem elektrisch leitenden Gehäusebereich fließt. Bei einer derartigen Ausgestaltung der Erfindung kann bei Vorliegen eines übermäßigen Stromflusses zwischen der Hilfspotentialschaltung und dem elektrisch leitenden Gehäusebereich der an den Ausgangsanschlüssen bereitstellbare Ausgangsstrom limitiert werden, wobei allerdings sichergestellt ist, dass dennoch an den Ausgangsanschlüssen eine Ausgangsspannung anliegt, so dass von der Energieversorgungseinheit in begrenztem Umfange noch elektrische Energie bereitgestellt wird. Dies hat den Vorteil, dass einerseits ein wirksamer Schutz des Benutzers vor einer elektrischen Gefährdung sichergestellt ist, und dass andererseits eine an die Energieversorgungseinheit angeschlossene Schweißstromquelle noch soweit mit Energie versorgt werden kann, dass an einer Anzeigevorrichtung der Schweißstromquelle das Vorliegen eines Fehlers angezeigt werden kann. Auch gibt die Bereitstellung der reduzierten Energie dem Benutzer die Möglichkeit, die Grenzwertüberschreitung an der Schweißstromquelle zu quittieren, wobei die Schweißstromquelle ein Rücksetzsignal auslösen kann, welches über eine Verbindungsleitung an die Energieversorgungseinheit übertragen werden kann, so dass anschließend von der Energieversorgungseinheit die reduzierte Energiebereitstellung beendet und statt dessen wieder die volle elektrische Energie bereitgestellt werden kann.

Günstig ist es, wenn die Energieversorgungseinheit ein Speicherglied aufweist zum Speichern der Zeiträume, in denen eine reduzierte Energiebereitstellung erfolgt. Das Speicherglied kann vom Benutzer ausgelesen werden und bildet eine Art Logbuch, mit dem die Zeiträume erfasst und dokumentiert werden können, in denen von der Energieversorgungseinheit nur eine reduzierte elektrische Energie bereitgestellt wurde.

Bei einer konstruktiv besonders einfachen Ausgestaltung der erfindungsgemäßen Energieversorgungseinheit weist die Schutzschaltung einen elektrisch steuerbaren Schalter auf, der in eine den elektrischen Akkumulator mit einem Ausgangsanschluss verbindende Ausgangsleitung geschaltet ist. Mittels des Schalters kann bei Vorliegen eines übermäßigen Stromflusses zwischen der Hilfspotentialschaltung und dem elektrisch leitenden Gehäusebereich die elektrische Verbindung zwischen dem Akkumulator und einem Ausgangsanschluss unterbrochen werden.

Der elektrisch steuerbare Schalter kann beispielsweise in Form eines Transistors oder in Form eines Relais ausgestaltet sein.

Von Vorteil ist es, wenn die Schutzschaltung eine Komparatorschaltung aufweist zum Vergleichen eines von der Hilfspotentialschaltung bereitgestellten, vom Stromfluss zwischen der Hilfspotentialschaltung und dem elektrisch leitfähigen Gehäusebereich abhängigen Hilfspotentials mit einem von diesem Stromfluss unabhängigen Referenzpotential. Bei einer derartigen Ausgestaltung der Schutzschaltung wird ein Hilfspotential mit einem Referenzpotential verglichen. Die Größe des Hilfspotentials ist abhängig vom Stromfluss, der zwischen der Hilfspotentialschaltung und dem elektrisch leitenden Gehäusebereich fließt. Es kann beispielsweise vorgesehen sein, dass das Hilfspotential bei einem übermäßigen Stromfluss geringer ist als bei einem nur geringfügigen Stromfluss. Insbesondere kann vorgesehen sein, dass das Hilfspotential umgekehrt proportional zum Stromfluss ist, so dass das Hilfspotential umso kleiner ist, je größer der Stromfluss zwischen der Hilfspotentialschaltung und dem elektrisch leitenden Gehäusebereich ist. Ein Vergleich des aktuellen Hilfspotentials mit einem Referenzpotential bildet ein Maß für den Stromfluss. Ein Fehlerfall kann durch Vergleich des Hilfspotentials mit dem Referenzpotential ermittelt werden. Dieser Vergleich kann von der Komparatorschaltung durchgeführt werden.

Bei einer besonders bevorzugten Ausgestaltung der Erfindung weist der elektrische Akkumulator mehrere Akkumulatorzellen auf, die mittels elektrisch steuerbarer Schaltglieder wahlweise in Reihe oder parallel zueinander geschaltet werden können, wobei die Schaltglieder mittels der Schutzschaltung steuerbar sind. Bei einer derartigen Ausgestaltung der Erfindung können die einzelnen Akkumulatorzellen des elektrischen Akkumulators im Normalfall in Reihe zueinander geschaltet werden, so dass eine vergleichsweise hohe Ausgangsspannung erzielt werden kann. Bei Vorliegen eines übermäßigen Stromflusses zwischen der Hilfspotentialschaltung und dem elektrisch leitenden Gehäusebereich werden zumindest einige der Akkumulatorzellen mittels der Schutzschaltung parallel zueinander geschaltet, so dass sich die Ausgangsspannung des elektrischen Akkumulators reduziert und dadurch eine Gefährdung des Benutzers ausgeschlossen werden kann. Das wahlweise Schalten der Akkumulatorzellen in Reihe oder parallel zueinander erfolgt mittels elektrisch steuerbarer Schaltglieder, die mit der Schutzschaltung verbunden sind. Die Schaltglieder können beispielsweise in Form von Relaiskontakten ausgestaltet sein und können von der Schutzschaltung in Abhängigkeit vom Stromfluss gesteuert werden, der zwischen der Hilfspotentialschaltung und dem elektrisch leitfähigen Gehäusebereich der Energieversorgungseinheit fließt.

Es kann vorgesehen sein, dass der elektrische Akkumulator eine Vielzahl von Akkumulatorzellen aufweist, wobei nur einzelne der Akkumulatorzellen wahlweise in Reihe oder parallel zueinander geschaltet werden können.

Von besonderem Vorteil ist es, wenn sämtliche Akkumulatorzellen des elektrischen Akkumulators wahlweise in Reihe oder parallel zueinander geschaltet werden können in Abhängigkeit vom Stromfluss, der von der Hilfspotentialschaltung zum elektrisch leitfähigen Gehäusebereich fließt.

Die nachfolgende Beschreibung vorteilhafter Ausführungsformen der Erfindung dient im Zusammenhang mit der Zeichnung der näheren Erläuterung. Es zeigen:
- Figur 1:: eine schematische Darstellung einer ersten vorteilhaften Ausführungsform einer erfindungsgemäßen Energieversorgungseinheit;
- Figur 2:: eine schematische Darstellung einer zweiten vorteilhaften Ausführungsform einer erfindungsgemäßen Energieversorgungseinheit, und
- Figur 3:: eine schematische Darstellung einer dritten vorteilhaften Ausführungsform einer erfindungsgemäßen Energieversorgungseinheit.

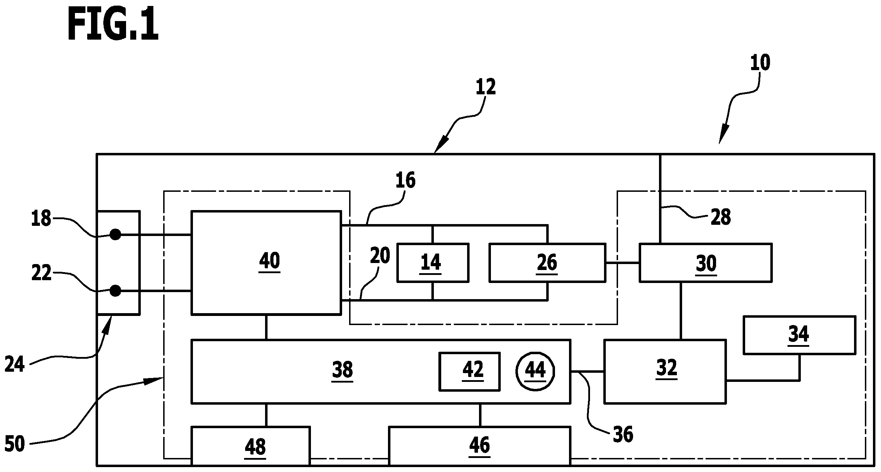

In Figur 1 ist schematisch in Form eines Blockschaltbildes eine erste vorteilhafte Ausführungsform einer erfindungsgemäßen Energieversorgungseinheit dargestellt. Die Ausführungsform ist insgesamt mit dem Bezugszeichen 10 belegt. Die Energieversorgungseinheit 10 umfasst ein elektrisch leitfähiges Gehäuse 12, das sich über die komplette Außenseite der Energieversorgungseinheit 10 erstreckt. Im Gehäuse 12 ist ein elektrischer Akkumulator 14 angeordnet, der über eine erste Ausgangsleitung 16 mit einem ersten Ausgangsanschluss 18 und über eine zweite Ausgangsleitung 20 mit einem zweiten Ausgangsanschluss 22 elektrisch verbunden ist. Die beiden Ausgangsanschlüsse 18 und 22 bildet jeweils einen Teil eines Anschlusselementes 24, das beispielsweise in Form einer Buchse oder in Form eines Steckers ausgestaltet sein kann. Über das Anschlusselement 24 kann die Energieversorgungseinheit 10 mit einer Schweißstromquelle verbunden werden. Hierbei kann der erste Ausgangsanschluss 18 an einen ersten Eingangsanschluss der Schweißstromquelle und der zweite Ausgangsanschluss 22 kann an einen zweiten Eingangsanschluss der Schweißstromquelle angeschlossen werden.

Über die beiden Ausgangsanschlüsse 18 und 22 kann die Schweißstromquelle mit elektrischer Energie versorgt werden, die vom elektrischen Akkumulator 14 bereitgestellt wird.

Der elektrische Akkumulator 14 steht darüber hinaus mit einer Hilfspotentialschaltung 26 in elektrischer Verbindung. Die Hilfspotentialschaltung 26 ermöglicht es, ein Hilfspotential bereitzustellen, das sich von dem vom elektrischen Akkumulator 14 bereitstellbaren Ausgangspotential unterscheidet. Die Hilfspotentialschaltung 26 steht über eine Gehäuseleitung 28 mit dem elektrisch leitenden Gehäuse 12 in Verbindung. Dies gibt die Möglichkeit, das elektrisch leitende Gehäuse 12 mit dem Hilfspotential zu beaufschlagen, das von der Hilfspotentialschaltung 26 bereitgestellt wird.

In die Gehäuseleitung 28 ist ein Strommessglied 30 geschaltet, mit dessen Hilfe der Stromfluss zwischen der Hilfspotentialschaltung 26 und dem Gehäuse 12 gemessen werden kann.

Das Strommessglied 30 steht mit einem Vergleichsglied 32 in elektrischer Verbindung, mit dem der vom Strommessglied 30 erfasste Stromwert mit einem Grenzwert verglichen werden kann, der in einem ersten Speicherelement 34 gespeichert ist. Im ersten Speicherelement 34 ist vom Hersteller der Energieversorgungseinheit 10 ein maximaler Stromwert gespeichert. Ist der vom Strommessglied 30 gemessene Stromwert größer als der im ersten Speicherelement 34 hinterlegte Grenzwert, so wird vom Vergleichsglied 32 über eine Steuerleitung 36 ein Steuersignal an ein Steuerglied 38 übertragen, das daraufhin eine Reduzierungsschaltung 40 aktiviert, die in die ersten Ausgangsleitung 16 und die zweite Ausgangsleitung 20 geschaltet ist. Im aktiven Zustand reduziert die Reduzierungsschaltung 40 die von der Energieversorgungseinheit 10 maximal bereitstellbare elektrische Energie. Hierzu kann mittels der Reduzierungsschaltung 40 die am ersten Ausgangsanschluss 18 und am zweiten Ausgangsanschluss 20 anliegende Ausgangsspannung begrenzt werden. Alternativ oder ergänzend kann vorgesehen sein, dass der vom Akkumulator 14 maximal bereitstellbare Ausgangsstrom begrenzt werden kann.

Beispielsweise kann vorgesehen sein, dass bei aktiver Reduzierungsschaltung 40 von der Energieversorgungseinheit 10 lediglich eine maximale Ausgangsspannung in Höhe von 120 V Gleichspannung bereitgestellt werden kann. Es kann auch vorgesehen sein, dass von der elektrischen Energieversorgungseinheit 10 ein maximaler Ausgangsstrom von 30 mA Gleichstrom bereitgestellt werden kann. Ist die Reduzierungsschaltung 40 nicht aktiv, so liegt eine derartige Beschränkung nicht vor. In diesem Falle kann von der Energieversorgungseinheit 10 eine maximale Ausgangsspannung von 300 V Gleichspannung bereitgestellt werden und der Ausgangsstrom kann mehr als 10 A betragen.

Das Steuerglied 38 weist ein zweites Speicherelement 42 auf sowie eine Uhr 44. Dies gibt die Möglichkeit, im zweiten Speicherelement 42 die Zeiträume, in denen eine reduzierte Energieabgabe erfolgt, zu speichern. Über ein Zustandsabfrageglied 46, das mit dem Steuerglied 38 in Verbindung steht, kann der Benutzer die gespeicherten Zeiträume abfragen. Er kann so im Nachhinein feststellen, zu welchen Zeiträumen von der Energieversorgungseinheit 10 nur eine reduzierte elektrische Energie bereitgestellt wurde.

Wie bereits erwähnt, wird die Reduzierungsschaltung 40 vom Steuerglied 38 aktiviert, sofern der Stromfluss, der über die Gehäuseleitung 28 fließt, einen vorgegebenen Grenzwert überschreitet. Selbst nach anschließender Unterschreitung des Grenzwertes bleibt die Reduzierungsschaltung 40 so lange aktiv, bis sie vom Steuerglied 38 deaktiviert wird. Hierzu kann der Benutzer ein Rücksetzglied 48 manuell betätigen, das mit dem Steuerglied 38 in elektrischer Verbindung steht und dem Steuerglied 38 nach Betätigung durch den Benutzer ein elektrisches Rücksetzsignal bereitstellt. Liegt das Rücksetzsignal 48 vor, so deaktiviert das Steuerglied 38 die Reduzierungsschaltung 40 und die Reduzierung der elektrischen Energie mittels der Reduzierungsschaltung 40 wird beendet.

Mittels der Energieversorgungseinheit 10 kann die Gefahr einer elektrischen Gefährdung eines Benutzers sehr gering gehalten werden. Das Risiko einer Gefährdung liegt vor, wenn zwischen der Hilfspotentialschaltung 26 und dem elektrisch leifähigen Gehäuse 12 ein unzulässig hoher Strom fließt. Dieser unzulässig hohe Stromfluss könnte - wie bereits erwähnt - entstehen, wenn der Ausgangsanschluss 18, der Ausgangsanschluss 22, die Ausgangsleitung 16 und/oder die Ausgangsleitung 20 im Fehlerfall (Feuchtigkeit, Schmutz, Beschädigung des Gehäuses 12) eine leitfähige Verbindung zum Gehäuse 12 erhielten. Ein derartiger Fall wird von der Energieversorgungseinheit 10 zuverlässig erkannt. Hierzu bilden das Strommessglied 30, das erste Speicherelement 34, das Vergleichsglied 32, das Steuerglied 38, die Reduzierungsschaltung 40 sowie das Zustandsabfrageglied 46 und das Rücksetzglied 48 gemeinsam eine Schutzschaltung 50 aus, die sicherstellt, dass im Falle einer Gefährdung die von der Energieversorgungseinheit 10 am Anschlusselement 24 bereitstellbare elektrische Energie reduziert wird. Die reduzierte Energieabgabe wird so lange beibehalten, bis der Benutzer das Rücksetzglied 48 betätigt.

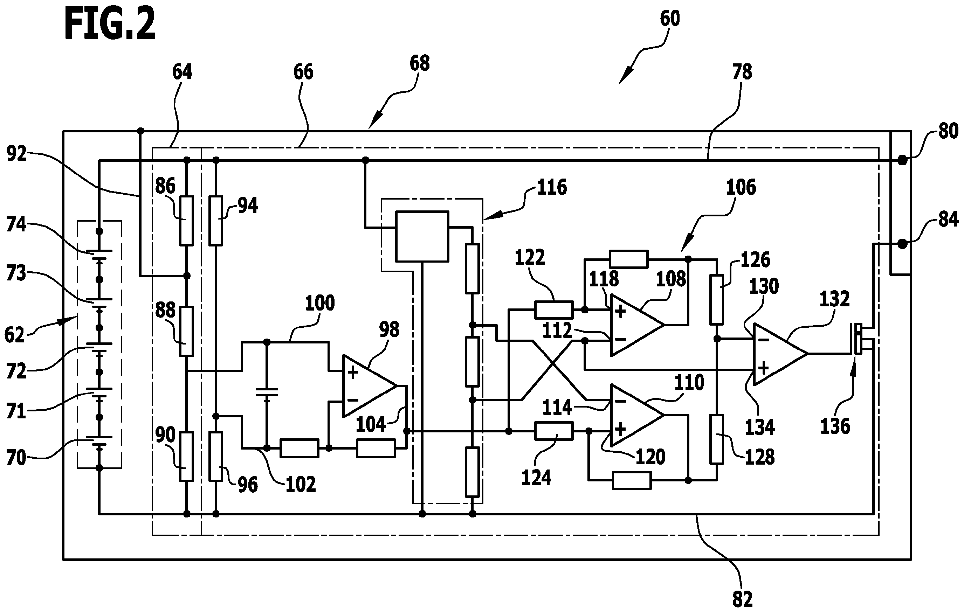

Eine zweite vorteilhafte Ausführungsform einer erfindungsgemäßen Energieversorgungseinheit ist schematisch in Figur 2 dargestellt und insgesamt mit dem Bezugszeichen 60 belegt. Die Energieversorgungseinheit 60 umfasst einen Akkumulator 62, der gemeinsam mit einer Hilfspotentialschaltung 64 und einer Schutzschaltung 66 in einem elektrisch leitenden Gehäuse 68 angeordnet ist. Der elektrische Akkumulator 62 weist mehrere Akkumulatorzellen 70, 71, 72, 73, 74 auf, die elektrisch in Reihe zueinander geschaltet sind. Der Pluspol des Akkumulators 62 ist über eine erste Ausgangsleitung 78 mit einem ersten Ausgangsanschluss 80 verbunden, und der Minuspol des Akkumulators 62 ist über eine zweite Ausgangsleitung 82 mit einem zweiten Ausgangsanschluss 84 verbunden.

Die Hilfspotentialschaltung 64 ist zwischen die erste Ausgangsleitung 78 und die zweite Ausgangsleitung 82 geschaltet und weist einen ersten Ohmschen Widerstand 86, einen zweiten Ohmschen Widerstand 88 und einen dritten Ohmschen Widerstand 90 auf, die Reihe zueinander geschaltet sind. Zwischen dem ersten Ohmschen Widerstand 86 und dem zweiten Ohmschen Widerstand 88 zweigt eine Gehäuseleitung 92 ab, über die die Hilfspotentialschaltung 64 mit dem elektrisch leitenden Gehäuse 68 verbunden ist.

Die Schutzschaltung 66 weist einen vierten Ohmschen Widerstand 94 und einen fünften Ohmschen Widerstand 96 auf, die in Reihe zueinander und parallel zu den Ohmschen Widerständen 86, 88 und 90 der Hilfspotentialschaltung 64 geschaltet sind. Die Schutzschaltung 66 weist außerdem einen ersten Differenzverstärker 98 auf, dem über eine erste Eingangsleitung 100 das elektrische Potential zugeführt wird, das zwischen dem zweiten Ohmschen Widerstand 88 und dem dritten Ohmschen Widerstand 90 der Hilfspotentialschaltung 64 vorliegt, und dem über eine zweite Eingangsleitung 102 das elektrische Potential zugeführt wird, das zwischen dem vierten Ohmschen Widerstand 94 und dem fünften Ohmschen Widerstand 96 vorliegt. Die Potentialdifferenz zwischen dem über die erste Eingangsleitung 100 zugeführten Potential und dem über die zweite Eingangsleitung 102 zugeführten Potential wird vom ersten Differenzverstärker 98 über eine Ausgangsleitung 104 einer Komparatorschaltung 106 der Schutzschaltung 66 zugeführt. Die Komparatorschaltung vergleicht die Potentialdifferenz mit vorgegebenen Vergleichspotentialen, die jeweils einen Grenzwert darstellen.Die Komparatorschaltung 106 weist einen zweiten Differenzverstärker 108 und einen dritten Differenzverstärker 110 auf. Dem invertierenden Eingang 112 des zweiten Differenzverstärkers 108 wird ein erstes Vergelichspotential zugeführt, das von einer Spannungsversorgungseinheit 116 bereitgestellt wird, und dem invertierenden Eingang 114 des dritten Differenzverstärkers 110 wird ein zweites Vergleichspotential zugeführt, das ebenfalls von der Spannungsversorgungseinheit 116 bereitgestellt wird. Die Spannungsversorgungseinheit 116 ist zwischen die erste Ausgangsleitung 78 und die zweite Ausgangsleitung 82 geschaltet.

Die nicht-invertierenden Eingänge 118 und 120 der zweiten und dritten Differenzverstärker 108 und 110 stehen über Eingangswiderstände 122 bzw. 124 mit dem Ausgang des ersten Differenzverstärkers 98 in elektrischer Verbindung. Das Ausgangssignal des ersten Differenzverstärkers 98 kann somit mittels der zweiten und dritten Differenzverstärker 108 und 110 jeweils mit einem Vergleichspotential verglichen werden. Die Ausgänge der zweiten und dritten Differenzverstärker 108 und 110 sind über Ausgangswiderstände 126 bzw. 128 mit dem invertierenden Eingang 130 eines vierten Differenzverstärkers 132 verbunden. Dem nicht-invertierenden Eingang 134 des vierten Differenzverstärkers 132 wird das Vergleichspotential zugeführt, das am invertierenden Eingang 112 des zweiten Differenzverstärkers 108 anliegt. Der Ausgang des vierten Differenzverstärkers 132 ist an den Steuereingang eines elektrisch steuerbaren Schaltelements, im dargestellten Ausführungsbeispiel an den Steuereingang eines Schalttransistors 136 angeschlossen, der in die zweite Ausgangsleitung 82 geschaltet ist.

Mit Hilfe der Komparatorschaltung 106 kann die Abweichung des zwischen dem zweiten Ohmschen Widerstand 88 und dem dritten Ohmschen Widerstand 90 der Hilfspotentialschaltung 64 abgegriffenen Hilfspotentials von dem zwischen dem vierten Ohmschen Widerstand 94 und dem fünften Ohmschen Widerstand 96 der Schutzschaltung 66 abgegriffenen Referenzpotential mit Grenzwerten verglichen werden, die von der Spannungsversorgungseinheit 116 vorgegeben werden. Das Hilfspotential ist vom Stromfluss abhängig, der über die Gehäuseleitung 92 von der Hilfspotentialschaltung 64 zum Gehäuse 68 oder in umgekehrter Richtung fließt. Das Hilfspotential ist somit ein Maß für den Stromfluss zwischen der Hilfspotentialschaltung 64 und dem Gehäuse 68.

Die Abweichung des Hilfspotentials vom Referenzpotential wird von der Komparatorschaltung 106 mit Grenzwerten verglichen. Überschreitet die Abweichung die durch die Spannungsversorgungseinheit 116 vorgegebenen Grenzwerte, so wird vom Schalttransistor 136 die elektrische Verbindung zwischen dem Minuspol des Akkumulators 62 und dem zweiten Ausgangsanschluss 82 unterbrochen. In entsprechender Weise kann in die erste Ausgangsleitung 78 ein vom vierten Differenzverstärker 132 steuerbarer Schalter (in der Zeichnung zur Erzielung einer besseren Übersicht nicht dargestellt) geschaltet sein, mit dem die elektrische Verbindung zwischen dem Pluspol des Akkumulators 62 und dem ersten Ausgangsanschluss 80 unterbrochen wird. Dies hat zur Folge, dass von der Energieversorgungseinheit 60 über die Ausgangsanschlüsse 80 und 84 keine elektrische Energie mehr bereitgestellt werden kann. Da die Abweichung des Hilfspotentials von den Referenzpotentialen einem übermäßigen Stromfluss zwischen der Hilfspotentialschaltung 64 und dem Gehäuse 68 entspricht, wird somit die Bereitstellung elektrischer Energie von der Energieversorgungseinheit 60 unterbrochen, sobald der Stromfluss zwischen der Hilfspotentialschaltung 64 und dem Gehäuse 68 einen vorgegebenen Wert überschreitet. Dies ist der Fall, falls eine Gefährdung des Benutzers vorliegt, der das elektrisch leitende Gehäuse 68 berührt, oder wenn aufgrund von Isolationsschäden eine leitende Verbindung vom Akkumulator 62 zum Gehäuse 68 vorliegt.

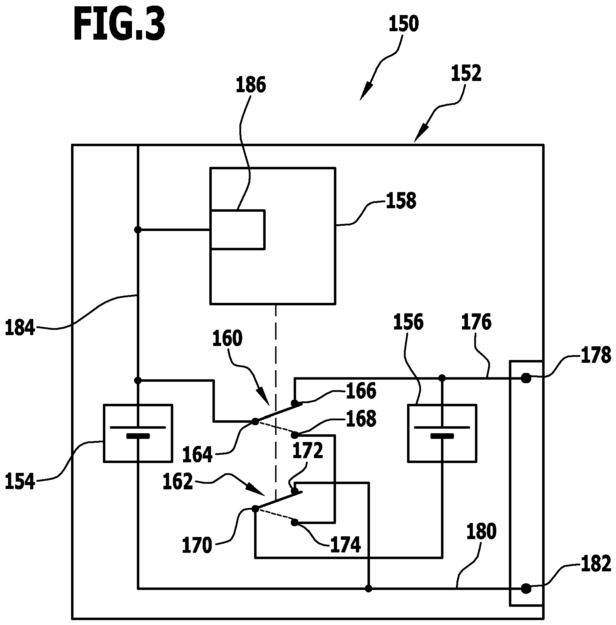

In Figur 3 ist eine dritte vorteilhafte Ausführungsform einer erfindungsgemäßen Energieversorgungseinheit schematisch dargestellt. Die Energieversorgungseinheit ist insgesamt mit dem Bezugszeichen 150 belegt und umfasst ein elektrisch leitfähiges Gehäuse 152, das einen elektrischen Akkumulator mit einer ersten Akkumulatorzelle 154 und einer zweiten Akkumulatorzelle 156 aufnimmt. Außerdem ist im Gehäuse 152 eine Schutzschaltung 158 angeordnet, die ein erstes Schaltglied 160 und ein zweites Schaltglied 162 steuert. Das erste Schaltglied 160 kann wahlweise eine elektrisch leitende Verbindung zwischen einem ersten Schaltkontakt 164 und einem zweiten Schaltkontakt 166 oder eine elektrisch leitende Verbindung zwischen dem ersten Schaltkontakt und 164 und einem dritten Schaltkontakt 168 herstellen. In entsprechender Weise kann das zweite Schaltglied 162 wahlweise eine elektrisch leitende Verbindung zwischen einem ersten Schaltkontakt 170 und einem zweiten Schaltkontakt 172 oder eine elektrisch leitende Verbindung zwischen dem ersten Schaltkontakt 170 und einem dritten Schaltkontakt 174 herstellen. Der erste Schaltkontakt 164 des ersten Schaltglieder 160 ist mit dem Pluspol der ersten Akkumulatorzelle 154 verbunden und der erste Schaltkontakt 170 des zweiten Schaltgliedes 162 ist mit dem Minuspol der zweiten Akkumulatorzelle 156 verbunden. Der zweite Schaltkontakt 166 des ersten Schaltgliedes 160 steht mit dem Pluspol der zweiten Akkumulatorzelle 156 in elektrischer Verbindung und der zweite Schaltkontakt 172 des zweiten Schaltgliedes 162 ist an den Minuspol der ersten Akkumulatorzelle 154 angeschlossen. Der dritte Schaltkontakt 168 des ersten Schaltgliedes 160 ist mit dem dritten Schaltkontakt 174 des zweiten Schaltgliedes 162 verbunden. Das erste Schaltglied 160 wird in gleicher Weise von der Schutzschaltung 158 gesteuert wie das zweite Schaltglied 162. Dies hat zur Folge, dass die beiden Akkumulatorzellen 154, 156 wahlweise in Reihe zueinander oder aber parallel zueinander geschaltet werden, je nachdem, welche Schaltstellung das erste Schaltglied 160 und das zweite Schaltglied 162 einnehmen. Die von den beiden Akkumulatorzellen 154, 156 bereitgestellte Ausgangsspannung wird über eine erste Ausgangsleitung 176 einem ersten Ausgangsanschluss 178 und über eine zweite Ausgangsleitung 180 einem zweiten Ausgangsanschluss 182 zugeführt.

Die erste Akkumulatorzelle 154 bildet bei der Energieversorgungseinheit 150 eine Hilfspotentialschaltung aus, die über eine Gehäuseleitung 184 mit dem elektrisch leitenden Gehäuse 152 verbunden ist. Der über die Gehäuseleitung 184 fließende Strom kann von einem Strommessglied 186 der Schutzschaltung 158 erfasst werden.

Die Schutzschaltung 158 ermöglicht es, den vom Strommessglied 186 bereitgestellten Stromwert mit einem vorgegebenen Grenzwert zu vergleichen.

Überschreitet der erfasste Stromwert den vorgegebenen Grenzwert, so steuert die Schutzschaltung 158 das erste Schaltglied 160 und das zweite Schaltglied 162 derart, dass die beiden Akkumulatorzellen 154 und 156 parallel zueinander geschaltet werden. Dies hat zur Folge, dass an den Ausgangsanschlüssen 178, 182 nur eine geringe Ausgangsspannung anliegt. Liegt keine Überschreitung des vorgegebenen Grenzwertes vor, so steuert die Schutzschaltung 158 die beiden Schaltglieder 160, 162 derart, dass die beiden Akkumulatorzellen 154, 156 in Reihe zueinander geschaltet sind, so dass an den Ausgangsanschlüssen 178, 182 eine höhere Ausgangsspannung anliegt. Die Schaltglieder 160, 162 bilden somit Steuerglieder, mit denen eine reduzierte Energieabgabe aktiviert und deaktiviert werden kann.

Auch die Energieversorgungseinheit 150 ermöglicht somit einen sichere Betriebsweise, ohne dass eine Gefährdung des Benutzers vorliegt. Hierzu wird auch bei der Energieversorgungseinheit 150 der zwischen der Hilfspotentialschaltung und dem Gehäuse fließende Strom überwacht und bei Überschreiten eines vorgegebenen Grenzwertes wird die von der Energieversorgungseinheit 150 bereitstellbare Energie reduziert.

## Patentansprüche

1. Energieversorgungseinheit zur Versorgung einer Schweißstromquelle mit elektrischer Energie, umfassend ein zumindest in einem Teilbereich elektrisch leitfähiges Gehäuse, einen im Gehäuse angeordneten elektrischen Akkumulator (14; 62; 154, 156) sowie einen ersten Ausgangsanschluss (18; 80; 178) und einen zweiten Ausgangsanschluss (22; 84; 182), wobei die beiden Ausgangsanschlüsse (18, 22; 80, 84; 178, 182) zur Bereitstellung elektrischer Energie mit Eingangsanschlüssen der Schweißstromquelle lösbar verbindbar sind, **dadurch gekennzeichnet, dass** die Energieversorgungseinheit (10; 60; 150) eine mit dem elektrisch leitfähigen Gehäusebereich (12; 68; 152) verbundene Hilfspotentialschaltung (26; 64; 154) sowie eine Schutzschaltung (50; 66; 158) aufweist, wobei die an den Ausgangsanschlüssen (18, 22; 80, 84; 178, 182) bereitstellbare elektrische Energie mittels der Schutzschaltung (50; 66; 158) in Abhängigkeit von einem Stromfluss reduzierbar ist, der zwischen der Hilfspotentialschaltung (26; 64; 154) und dem elektrisch leitfähigen Gehäusebereich (12; 68; 152) fließt, wobei die Hilfspotentialschaltung (26; 64; 154) ein Hilfspotential bereitstellt, das sich von dem Potential unterscheidet, das vom elektrischen Akkumulator (14; 62; 154, 156) bereitgestellt wird.

2. Energieversorgungseinheit nach Anspruch 1, **dadurch gekennzeichnet, dass** die von der Energieversorgungseinheit (10; 60; 150) bereitstellbare elektrische Energie mittels der Schutzschaltung (50; 66; 158) reduzierbar ist, wenn der Stromfluss zwischen der Hilfspotentialschaltung (26; 64; 154) und dem elektrisch leitenden Gehäusebereich (12; 68; 152) einen vorgegebenen oder vorgebbaren Grenzwert überschreitet.

3. Energieversorgungseinheit nach Anspruch 1 oder 2, **dadurch gekennzeichnet, dass** nach Überschreiten eines vorgegebenen oder vorgebbaren Grenzwertes des zwischen der Hilfspotentialschaltung (26; 64; 154) und dem elektrisch leitfähigen Gehäusebereich (12; 68; 152) fließenden Stromes die reduzierte Energieabgabe durch Auslösen eines Rücksetzsignals beendbar ist.

4. Energieversorgungseinheit nach einem der voranstehenden Ansprüche, **dadurch gekennzeichnet, dass** die Schutzschaltung (50; 158) ein Steuerglied (38; 160, 162) zum Aktivieren und Deaktivieren der reduzierten Energieabgabe aufweist.

5. Energieversorgungseinheit nach Anspruch 4, **dadurch gekennzeichnet, dass** das Steuerglied (38) mit einem Rücksetzglied (48) zum Deaktivieren der reduzierten Energieabgabe verbunden ist.

6. Energieversorgungseinheit nach Anspruch 5, **dadurch gekennzeichnet, dass** das Rücksetzglied (48) vom Benutzer manuell betätigbar ist.

7. Energieversorgungseinheit nach einem der voranstehenden Ansprüche, **dadurch gekennzeichnet, dass** die an den Ausgangsanschlüssen (18, 22; 80, 84; 178, 182) anliegende Ausgangsspannung mittels der Schutzschaltung (50; 66; 158) reduzierbar ist.

8. Energieversorgungseinheit nach einem der voranstehenden Ansprüche, **dadurch gekennzeichnet, dass** eine elektrische Verbindung zwischen mindestens einem Ausgangsanschluss (18, 20; 84) und dem elektrischen Akkumulator (14; 62) in Abhängigkeit vom Stromfluss trennbar ist, der zwischen der Hilfspotentialschaltung (26; 64) und dem elektrisch leitenden Gehäusebereich fließt.

9. Energieversorgungseinheit nach einem der voranstehenden Ansprüche, **dadurch gekennzeichnet, dass** der an den Ausgangsanschlüssen (18, 22; 80, 84; 178, 182) bereitstellbare Ausgangsstrom mittels der Schutzschaltung (50; 66; 158) in Abhängigkeit vom Stromfluss begrenzbar ist, der zwischen der Hilfspotentialschaltung (26; 64; 154) und dem elektrisch leitenden Gehäusebereich (12; 68; 152) fließt.

10. Energieversorgungseinheit nach Anspruch 9, **dadurch gekennzeichnet, dass** der Ausgangsstrom unter Beibehaltung einer an den Ausgangsanschlüssen (18, 22; 80, 84; 178, 182) anliegenden Ausgangsspannung mittels der Schutzschaltung (50; 66; 158) in Abhängigkeit vom Stromfluss begrenzbar ist, der zwischen der Hilfspotentialschaltung (26; 64; 154) und dem elektrisch leitenden Gehäusebereich (12; 68; 152) fließt.

11. Energieversorgungseinheit nach einem der voranstehenden Ansprüche, **dadurch gekennzeichnet, dass** die Energieversorgungseinheit (10) ein Speicherglied (42) zum Speichern der Zeiträume aufweist, in denen eine reduzierte Energieabgabe erfolgt.

12. Energieversorgungseinheit nach einem der voranstehenden Ansprüche, **dadurch gekennzeichnet, dass** die Schutzschaltung (66) einen elektrisch steuerbaren Schalter (136) aufweist, der in eine den elektrischen Akkumulator (62) mit einem Ausgangsanschluss (84) verbindende Ausgangsleitung (82) geschaltet ist.

13. Energieversorgungseinheit nach einem der voranstehenden Ansprüche, **dadurch gekennzeichnet, dass** die Schutzschaltung (66) eine Komparatorschaltung (106) aufweist zum Vergleichen eines von der Hilfspotentialschaltung (64) bereitgestellten, vom Stromfluss zwischen der Hilfspotentialschaltung (64) und dem elektrisch leitenden Gehäusebereich (68) abhängigen Hilfspotentials mit einem von diesem Stromfluss unabhängigen Referenzpotential.

14. Energieversorgungseinheit nach einem der voranstehenden Ansprüche, **dadurch gekennzeichnet, dass** der elektrische Akkumulator mehrere Akkumulatorzellen (154, 156) aufweist, die mittels elektrisch steuerbarer Schaltglieder (160, 162) wahlweise in Reihe oder parallel zueinander geschaltet werden können, wobei die Schaltglieder (160, 162) mittels der Schutzschaltung steuerbar sind.

## Claims

1. Energy supply unit for supplying a welding current source with electrical energy, comprising a housing that is electrically conductive at least in a section, an electrical accumulator (14; 62; 154, 156) arranged in the housing, as well as a first output terminal (18; 80; 178) and a second output terminal (22; 84; 182), wherein both output terminals (18, 22; 80, 84; 178, 182) are detachably connectable to the input terminals of the welding current source for providing electrical energy, **characterized in that** the energy supply unit (10; 60; 150) comprises an auxiliary potential circuit (26; 64; 154) connected to the electrically conductive housing region (12; 68; 152) as well as a protection circuit (50; 66; 158), wherein the electrical energy providable at the output terminals (18, 22; 80, 84; 178, 182) is reducible by means of the protection circuit (50; 66; 158) depending on a current flow that flows between the auxiliary potential circuit (26; 64; 154) and the electrically conductive housing region (12; 68; 152), wherein the auxiliary potential circuit (26; 64; 154) provides an auxiliary potential that differs from the potential that is provided by the electrical accumulator (14; 62; 154, 156).

2. Energy supply unit according to Claim 1, **characterized in that** the electrical energy providable by the energy supply unit (10; 60; 150) is reducible by means of the protection circuit (50; 66; 158) if the current flow between the auxiliary potential circuit (26; 64; 154) and the electrically conductive housing region (12; 68; 152) exceeds a specified or specifiable threshold value.

3. Energy supply unit according to either of Claims 1 or 2, **characterized in that** the reduced energy output can be ended by initiating a reset signal after a specified or specifiable threshold value of the current flowing between the auxiliary potential circuit (26; 64; 154) and the electrically conductive housing region (12; 68; 152) is exceeded.

4. Energy supply unit according to any one of the preceding claims, **characterized in that** the protection circuit (50; 158) comprises a control member (38; 160, 162) for activating and deactivating the reduced energy output.

5. Energy supply unit according to Claim 4, **characterized in that** the control member (38) is connected to a reset member (48) for deactivating the reduced energy output.

6. Energy supply unit according to Claim 5, **characterized in that** the reset member (48) is manually operable by the user.

7. Energy supply unit according to any one of the preceding claims, **characterized in that** the output voltage being applied at the output terminals (18, 22; 80, 84; 178, 182) is reducible by means of the protection circuit (50; 66; 158).

8. Energy supply unit according to any one of the preceding claims, **characterized in that** an electrical connection between at least one output terminal (18, 20; 84) and the electrical accumulator (14; 62) is severable depending on the current flow that flows between the auxiliary potential circuit (26; 64) and the electrically conductive housing region.

9. Energy supply unit according to any one of the preceding claims, **characterized in that** the output current providable at the output terminals (18, 22; 80, 84; 178, 182) is limitable by means of the protection circuit (50; 66; 158) depending on the current flow that flows between the auxiliary potential circuit (26; 64; 154) and the electrically conductive housing region (12; 68; 152).

10. Energy supply unit according to Claim 9, **characterized in that** the output current is limitable by means of the protection circuit (50; 66; 158) depending on the current flow that flows between the auxiliary potential circuit (26; 64; 154) and the electrically conductive housing region (12; 68; 152), while maintaining an output voltage being applied at the output terminals (18, 22; 80, 84; 178, 182).

11. Energy supply unit according to any one of the preceding claims, **characterized in that** the energy supply unit (10) comprises a storage member (42) for storing the time periods in which a reduced energy output occurs.

12. Energy supply unit according to any one of the preceding claims, **characterized in that** the protection circuit (66) comprises an electrically controllable switch (136) that is arranged in an output line (82) connecting the electrical accumulator (62) to an output terminal (84).

13. Energy supply unit according to any one of the preceding claims, **characterized in that** the protection circuit (66) comprises a comparator circuit (106) for comparing an auxiliary potential, which is provided by the auxiliary potential circuit (64) and is dependent on the current flow between the auxiliary potential circuit (64) and the electrically conductive housing region (68), to a reference potential independent of said current flow.

14. Energy supply unit according to any one of the preceding claims, **characterized in that** the electrical accumulator comprises multiple accumulator cells (154, 156) that may be optionally connected in series or in parallel to each other by means of electrically controllable switching members (160, 162), wherein the switching members (160, 162) are controllable by means of the protection circuit.

## Revendications

1. Unité d'alimentation en énergie pour alimenter une source de courant de soudage avec une énergie électrique, comprenant un boîtier électriquement conducteur dans au moins une partie, un accumulateur électrique (14 ; 62 ; 154, 156) agencé dans le boîtier ainsi qu'une première borne de sortie (18 ; 80 ; 178) et une seconde borne de sortie (22 ; 84 ; 182), dans laquelle les deux bornes de sortie (18, 22 ; 80, 84 ; 178, 182) peuvent être raccordées de façon amovible avec des bornes d'entrée de la source de courant de soudage pour la fourniture d'une énergie électrique, **caractérisée en ce que** l'unité d'alimentation en énergie (10 ; 60 ; 150) présente un circuit de potentiel auxiliaire (26 ; 64 ; 154) raccordé à la partie de boîtier (12 ; 68 ; 152) électriquement conductrice ainsi qu'un circuit de protection (50 ; 66 ; 158), dans laquelle l'énergie électrique pouvant être fournie au niveau des bornes de sortie (18, 22 ; 80, 84 ; 178, 182) peut être réduite au moyen du circuit de protection (50 ; 66 ; 158) en fonction d'un courant qui circule entre le circuit de potentiel auxiliaire (26 ; 64 ; 154) et la partie de boîtier (12 ; 68 ; 152) électriquement conductrice, dans laquelle le circuit de potentiel auxiliaire (26 ; 64 ; 154) fournit un potentiel auxiliaire qui se différencie du potentiel qui est fourni par l'accumulateur électrique (14 ; 62 ; 154, 156).

2. Unité d'alimentation en énergie selon la revendication 1, **caractérisée en ce que** énergie électrique pouvant être fournie par l'unité d'alimentation en énergie (10 ; 60 ; 150) peut être réduite au moyen du circuit de protection (50 ; 66 ; 158) lorsque le courant entre le circuit de potentiel auxiliaire (26 ; 64 ; 154) et la partie de boîtier (12 ; 68 ; 152) électriquement conductrice dépasse une valeur seuil prédéterminée ou pouvant être prédéterminée.

3. Unité d'alimentation en énergie selon la revendication 1 ou 2, **caractérisée en ce qu'**après dépassement d'une valeur seuil prédéterminée ou pouvant être prédéterminée du courant circulant entre le circuit de potentiel auxiliaire (26 ; 64 ; 154) et la partie de boîtier (12 ; 68 ; 152) électriquement conductrice, la transmission réduite d'énergie peut être terminée par émission d'un signal de réinitialisation.

4. Unité d'alimentation en énergie selon l'une quelconque des revendications précédentes, **caractérisée en ce que** le circuit de protection (50 ; 158) présente un élément de pilotage (38 ; 160, 162) pour activer et désactiver la transmission réduite d'énergie.

5. Unité d'alimentation en énergie selon la revendication 4, **caractérisée en ce que** l'élément de pilotage (38) est raccordé à un élément de réinitialisation (48) pour désactiver la transmission réduite d'énergie.

6. Unité d'alimentation en énergie selon la revendication 5, **caractérisée en ce que** l'élément de réinitialisation (48) peut être actionné manuellement par l'utilisateur.

7. Unité d'alimentation en énergie selon l'une quelconque des revendications précédentes, **caractérisée en ce que** la tension de sortie située au niveau des bornes de sortie (18, 22 ; 80, 84 ; 178, 182) peut être réduite au moyen du circuit de protection (50 ; 66 ; 158).

8. Unité d'alimentation en énergie selon l'une quelconque des revendications précédentes, **caractérisée en ce qu'**un raccordement électrique entre au moins une borne de sortie (18, 20 ; 84) et l'accumulateur électrique (14 ; 62) peut être séparé en fonction du courant qui circule entre le circuit de potentiel auxiliaire (26 ; 64) et la partie de boîtier électriquement conductrice.

9. Unité d'alimentation en énergie selon l'une quelconque des revendications précédentes, **caractérisée en ce que** le courant de sortie pouvant être fourni au niveau des bornes de sortie (18, 22 ; 80, 84 ; 178, 182) peut être limité au moyen du circuit de protection (50 ; 66 ; 158) en fonction du courant qui circule entre le circuit de potentiel auxiliaire (26 ; 64 ; 154) et la partie de boîtier (12 ; 68 ; 152) électriquement conductrice.

10. Unité d'alimentation en énergie selon la revendication 9, **caractérisée en ce que** le courant de sortie peut, sous condition de maintien d'une tension de sortie située au niveau des bornes de sortie (18, 22 ; 80, 84 ; 178, 182), être limité au moyen du circuit de protection (50 ; 66 ; 158) en fonction du courant qui circule entre le circuit de potentiel auxiliaire (26 ; 64 ; 154) et la partie de boîtier (12 ; 68 ; 152) électriquement conductrice.

11. Unité d'alimentation en énergie selon l'une quelconque des revendications précédentes, **caractérisée en ce que** l'unité d'alimentation en énergie (10) présente un élément de mémorisation (42) pour mémoriser les périodes durant lesquelles se produit une transmission réduite d'énergie.

12. Unité d'alimentation en énergie selon l'une quelconque des revendications précédentes, **caractérisée en ce que** le circuit de protection (66) présente un disjoncteur pouvant être piloté électriquement (136) qui est monté dans une conduite de sortie (82) raccordant l'accumulateur électrique (62) à une borne de sortie (84).

13. Unité d'alimentation en énergie selon l'une quelconque des revendications précédentes, **caractérisée en ce que** le circuit de protection (66) présente un circuit comparateur (106) pour comparer un potentiel auxiliaire fourni par le circuit de potentiel auxiliaire (64) et dépendant du courant entre le circuit de potentiel auxiliaire (64) et la partie de boîtier (68) électriquement conductrice, avec un potentiel de référence indépendant de ce courant.

14. Unité d'alimentation en énergie selon l'une quelconque des revendications précédentes, **caractérisée en ce que** l'accumulateur électrique présente plusieurs cellules d'accumulateur (154, 156) qui peuvent être connectées au moyen d'un élément de commutation (160, 162) électriquement pilotable soit en série soit parallèlement les unes aux autres, dans laquelle les éléments de commutation (160, 162) peuvent être pilotés au moyen du circuit de protection.
